# EUROPÄISCHE PATENTSCHRIFT

(11) **EP 3 824 712 B1**
(45) Veröffentlichungstag und Bekanntmachung des Hinweises auf die Patenterteilung: **12.07.2023**
(21) Anmeldenummer: 20208799.5
(22) Anmeldetag: 20.11.2020
(51) Int. Cl.: A01D 34/00, A47L 9/28, B60B 3/00, A47L 9/00, B60B 19/12, A47L 11/40

(54) **SYSTEM AUS EINER BASISSTATION UND EINEM SELBSTTÄTIG FORTBEWEGENDEN BODENBEARBEITUNGSGERÄT**
SYSTEM COMPRISING A BASE STATION AND AN AUTONOMOUSLY MOVING EARTH WORKING IMPLEMENT
SYSTÈME COMPOSÉ D'UNE STATION DE BASE ET D'UN APPAREIL DE TRAVAIL DU SOL SE DÉPLACANT DE MANIÈRE AUTONOME

(30) Priorität: 22.11.2019 DE 102019131662
(43) Veröffentlichungstag der Anmeldung: 26.05.2021
(73) Patentinhaber: Vorwerk & Co. Interholding GmbH, 42275 Wuppertal (DE)
(72) Erfinder: Windorfer, Harald, 40822 Mettmann (DE)
(74) Vertreter: Müller, Enno

(56) Entgegenhaltungen:
- WO-A1-99/38056
- CN-A- 106 618 390
- CN-A- 107 405 031
- DE-A1-102008 009 617
- US-A1- 2004 255 425
- US-A1- 2014 289 992

## Beschreibung

### Gebiet der Technik

Die Erfindung betrifft ein System aus einer Basisstation zum Ausführen einer Servicehandlung an einem Bodenbearbeitungsgerät und einem sich selbsttätig fortbewegenden Bodenbearbeitungsgerät mit zumindest zwei Antriebsrädern, wobei die Basisstation ein Grundgehäuse mit einer Schnittstelle zum Andocken des Bodenbearbeitungsgerätes und einen der Schnittstelle zugeordneten, von dem Grundgehäuse mit einer überwiegenden Längserstreckung wegweisenden Führungsausleger zum ausschließlich mechanischen Führen einer Andockbewegung des Bodenbearbeitungsgerätes zu der Schnittstelle aufweist, wobei eine in einer vertikalen Draufsicht betrachtete Außenkontur des Führungsauslegers ausgehend von dem Grundgehäuse bis zu einem von dem Grundgehäuse abgewandten freien Endbereich des Führungsauslegers verjüngt ist.

### Stand der Technik

Sich selbsttätig fortbewegende Bodenbearbeitungsgeräte mit Antriebsrädern sind im Stand der Technik bekannt. Die Antriebsräder können grundsätzlich wie beispielsweise in der DE 10 2008 009 617 A1 beschrieben ausgebildet sein und einen Radkörper mit einer Arbeitslauffläche aufweisen.

Die Bodenbearbeitungsgeräte dienen in Haushalten einer selbsttätigen Bodenbearbeitung, beispielsweise Bodenreinigung und/oder Bodenpflege. Der Antrieb der Bodenbearbeitungsgeräte erfolgt über die elektromotorisch angetriebenen Antriebsräder, weiter insbesondere über zwei unabhängig voneinander steuerbare Antriebsräder.

Des Weiteren ist es bekannt, dass Bodenbearbeitungsgeräte selbstständig eine Basisstation anfahren können, um dort einen Service zu bekommen, beispielsweise das Aufladen eines Akkumulators des Bodenbearbeitungsgerätes, das Entleeren einer Staubsammelkammer, das Wechseln beziehungsweise Aufnehmen eines Zubehörs oder Ähnliches. Zu diesem Zweck nutzen im Stand der Technik bekannte Bodenbearbeitungsgeräte Softwarelösungen, die ein Andocken des Bodenbearbeitungsgerätes an der Basisstation steuern. Insbesondere ist es beispielsweise bekannt, die Basisstation mit optischen Markern auszustatten, die von einem Sensor des Bodenbearbeitungsgerätes ausgelesen werden können, um den Andockvorgang zu steuern.

Des Weiteren sind im Stand der Technik auch Basisstationen bekannt, welche einen Führungsausleger zum mechanischen Führen einer Andockbewegung des Bodenbearbeitungsgerätes aufweisen. Derartige Basisstationen offenbaren beispielsweise die Dokumente US 2004/255425 A1, WO 99/38056 A1 und CN 106 618 390 A. Die US 2014/289992 A1 zeigt einen sich selbsttätig fortbewegenden Reinigungsroboter mit angetriebenen Rädern. Des Weiteren geht aus der CN 107 405 031 A eine Basisstation hervor, an welcher ein sich selbststätig fortbewegendes Bodenbearbeitungsgerät ankoppeln kann. Die Basisstation weist eine Rampe mit ansteigender Oberfläche auf, auf welche der Roboter zum Entleeren seines Staubbehälters auffahren kann.

### Zusammenfassung der Erfindung

Ausgehend von dem vorgenannten Stand der Technik ist es Aufgabe der Erfindung, das Andocken des Bodenbearbeitungsgerätes an der Basisstation weiter zu erleichtern.

Zur Lösung dieser Aufgabe wird ein System gemäß Anspruch 1 vorgeschlagen, bei welchem zumindest ein Antriebsrad des Bodenbearbeitungsgerätes einen eine Antriebswelle aufnehmenden Radkörper und eine in Umfangsrichtung an dem Radkörper ausgebildete Arbeitslauffläche aufweist, wobei der Radkörper ein konzentrisch an einer Radkörperstirnseite hervorstehendes zylindrisches Auflaufelement mit einer in Umfangsrichtung an dem Auflaufelement ausgebildeten Auflauffläche aufweist, wobei ein Auflaufflächendurchmesser der Auflauffläche geringer ist als ein Arbeitslaufflächendurchmesser der Arbeitslauffläche und wobei das Auflaufelement auf einer dem anderen Antriebsrad zugewandten Radkörperstirnseite angeordnet ist, wobei eine vertikale Höhe des Führungsauslegers der Basisstation größer ist als die halbe Durchmesserdifferenz zwischen dem Auflaufflächendurchmesser und dem Arbeitslauflächendurchmesser des Antriebsrades, so dass das Antriebsrad des Bodenbearbeitungsgerätes nicht mehr auf der Arbeitslauffläche abgestützt ist, wenn die Auflauffläche auf dem Führungsausleger abrollt.

Die Basisstation weist einen von dem Grundgehäuse wegweisenden langgeformten Führungsausleger auf, welcher sich bezogen auf eine Andockrichtung des Bodenbearbeitungsgerätes zu dem Grundgehäuse hin aufweitet, um zunächst ein grobes Ausrichten des Bodenbearbeitungsgerätes relativ zu der Basisstation und danach eine immer exaktere Justage zu erreichen. Lotrecht von oben betrachtet ist die Außenkontur des Führungsauslegers insgesamt somit nicht als Rechteck ausgestaltet, sondern vielmehr im Wesentlichen keilförmig und/oder trapezförmig, wobei die Außenkontur auch nur bezogen auf einen bestimmten Längenabschnitt des Führungsauslegers eine Änderung deren Breite aufweisen kann. Beispielsweise kann sich der Führungsausleger in Richtung seiner Längserstreckung in zwei Bereiche aufteilen, von welchen ein erster, dem Grundgehäuse der Basisstation nächstliegender Bereich rechteckförmig mit parallel zueinander orientierten Außenkanten ausgestaltet ist, und ein zweiter, dem Grundgehäuse ferner Bereich aufeinander zulaufende Außenkanten aufweist. Die Außenkanten des Führungsauslegers weiten sich somit von dem freien Endbereich des Führungsauslegers in Richtung des Grundgehäuses betrachtet auf. Die Aufweitung kann stetig, unstetig, gerade, gekrümmt oder anders geformt verlaufen. Der derart ausgebildete Führungsausleger der Basisstation dient zur Zusammenwirkung mit einem Antriebsrad des Bodenbearbeitungsgerätes, wobei der Führungsausleger der Basisstation und das Antriebsrad des Bodenbearbeitungsgerätes so zusammenwirken, dass das Bodenbearbeitungsgerät auf rein mechanische Art und Weise zu der Schnittstelle der Basisstation geführt wird und dort in optimaler Position andocken kann. Es ist nicht erforderlich, dass das Bodenbearbeitungsgerät über richtungslenkende Steuermechanismen verfügt, die das Bodenbearbeitungsgerät im Bereich des Führungsauslegers relativ zu der Schnittstelle ausrichten. Dies wird allein durch die mechanische Führung des Führungsauslegers und eine später noch beschriebene Justagekomponente des Antriebsrades erreicht.

In Bezug auf die Basisstation wird des Weiteren zunächst vorgeschlagen, dass diese eine durch das Bodenbearbeitungsgerät befahrbare Bodenplatte aufweist, auf welcher der Führungsausleger ausgebildet oder angeordnet ist. Andererseits könnte die Basisstation alternativ auch so ausgestaltet sein, dass der Führungsausleger - ohne Bodenplatte - unmittelbar auf einer Bodenfläche aufliegt. Die vorgeschlagene Bodenplatte kann grundsätzlich einteilig mit dem Führungsausleger ausgebildet sein oder diesen als separates Element tragen. In jedem Fall dient der Führungsausleger als Führung für zumindest ein Antriebsrad eines Bodenbearbeitungsgerätes.

Des Weiteren wird vorgeschlagen, dass der Endbereich des Führungsauslegers bezogen auf eine horizontale Ansicht eine nach außen weisende Anlaufschräge aufweist. Gemäß dieser Ausgestaltung weist zumindest der freie Endbereich des Führungsauslegers eine schräge Randkante auf, auf welche ein Teilbereich eines Antriebsrades des Bodenbearbeitungsgerätes erleichtert auffahren kann. Der Endbereich des Führungsauslegers weist somit keine senkrecht zu einer Bodenfläche beziehungsweise der Bodenplatte der Basisstation stehende Kante auf, die dem Antriebsrad des Bodenbearbeitungsgerätes als Stufe hinderlich entgegensteht. Die Anlaufschräge kann auf unterschiedliche Art und Weise ausgestaltet sein, beispielsweise spitz zulaufend oder abgerundet sein.

Das Antriebsrad des Bodenbearbeitungsgerätes weist einen eine Antriebswelle aufnehmenden Radkörper und eine in Umfangsrichtung an dem Radkörper ausgebildete Arbeitslauffläche auf, wobei der Radkörper ein konzentrisch an einer Radkörperstirnseite hervorstehendes zylindrisches Auflaufelement mit einer in Umfangsrichtung an dem Auflaufelement ausgebildeten Auflauffläche aufweist, wobei ein Auflaufflächendurchmesser der Auflauffläche geringer ist als ein Arbeitslaufflächendurchmesser der Arbeitslauffläche. Das Antriebsrad ist dazu ausgebildet, mit dem Führungsausleger der zuvor beschriebenen Basisstation derart zusammenzuwirken, dass das Antriebsrad aufweisende Bodenbearbeitungsgerät auf rein mechanische Art und Weise relativ zu der Schnittstelle der Basisstation ausgerichtet wird und in definierter Position und Orientierung an der Basisstation andocken kann, um eine Servicehandlung von der Basisstation zu empfangen. Zu diesem Zweck weist das Antriebsrad einen Radkörper auf, der in üblicher Art und Weise eine Arbeitslauffläche aufweist, auf welcher das Antriebsrad üblicherweise auf einer zu bearbeitenden Fläche abrollt. Darüber hinaus weist das erfindungsgemäße Antriebsrad nun zusätzlich auch ein an dem Radkörper ausgebildetes Auflaufelement auf, welches einen scheibenförmigen Vorsprung an der Radkörperstirnseite bildet, der mit dem Radkörper konzentrisch um die Antriebswelle rotiert, jedoch einen geringeren Durchmesser aufweist als die Arbeitslauffläche des Radkörpers selbst. Bezogen auf einen parallel zu der Antriebswelle verlaufenden Schnitt durch das Antriebsrad weist das Auflaufelement einen stufenförmigen Übergang zu dem Rest des Radkörpers auf. Die Arbeitslauffläche des Radkörpers und die Auflauffläche des Auflaufelementes sind vorzugsweise parallel zueinander orientiert, wobei diese allerdings bezogen auf eine ausgehend von der Antriebswelle radiale Richtung einen Abstand zueinander aufweisen, der durch die unterschiedlichen Durchmesser bedingt ist. Das Auflaufelement dient bei dem Andockvorgang des Bodenbearbeitungsgerätes an der Basisstation zum Befahren einer Oberseite eines Führungsauslegers der Basisstation mit einem ersten Antriebsrad des Bodenbearbeitungsgerätes, insbesondere wenn das Bodenbearbeitungsgerät schräg auf die Basisstation zusteuert, nämlich so, dass die Radkörperstirnseite des ersten Antriebsrades und die Außenkontur des Führungsauslegers, nicht parallel zueinander verlaufen. Da der Auflaufflächendurchmesser des in Kontakt mit dem Führungsausleger stehenden Auflaufelementes geringer ist als der Arbeitslaufflächendurchmesser der auf einem Untergrund abrollenden Arbeitslauffläche eines zweiten Antriebsrades, wird das Bodenbearbeitungsgerät bei Auflaufen des ersten Antriebsrades auf den Führungsausleger in eine gewünschte Andockrichtung gezogen. Dies erfolgt aufgrund der unterschiedlichen Laufflächenumfänge der Antriebsräder des Bodenbearbeitungsgerätes, von welchen eines in üblicher Art und Weise mit dem Arbeitslaufflächendurchmesser auf einer Bodenfläche steht, und das andere mit dem Auflaufflächendurchmesser auf dem Führungsausleger steht. Da beide Antriebsräder zwar mit gleicher Geschwindigkeit um die Antriebswelle rotieren, sich deren zurückgelegte Wegstrecken jedoch aufgrund der abweichenden Laufflächenumfänge unterscheiden, wird das Bodenbearbeitungsgerät zu derjenigen Geräteseite abgelenkt, an welcher dasjenige Antriebsrad angeordnet ist, dessen Auflaufelement auf dem Führungsausleger abrollt.

Des Weiteren wird vorgeschlagen, dass der Auflaufflächendurchmesser ungefähr 70% bis 90% des Arbeitslaufflächendurchmessers beträgt. Insbesondere kann der Auflaufflächendurchmesser ungefähr 80% des Arbeitslaufflächendurchmessers betragen. Der Außendurchmesser des Auflaufelementes ist somit gegenüber dem Außendurchmesser der Arbeitslauffläche um etwa 10% bis 30%, insbesondere 20%, verringert. Dadurch besitzt das Auflaufelement bei in üblicher Art und Weise auf einer Bodenfläche stehendem Bodenbearbeitungsgerät einen ausreichenden Abstand zu der Bodenfläche und trägt nicht zu einer Fortbewegung des Bodenbearbeitungsgerätes bei. Wenn jedoch das Bodenbearbeitungsgerät auf die Basisstation zusteuert, kann ein nach unten weisender Umfangsabschnitt der Auflauffläche in Kontakt mit der Oberseite des Führungsauslegers der Basisstation gelangen und somit zur Neuausrichtung des Bodenbearbeitungsgerätes an der Basisstation beitragen.

Des Weiteren wird vorgeschlagen, dass die Auflauffläche des Auflaufelementes in axialer Richtung eine Auflaufflächenbreite von 2 mm bis 10 mm aufweist. Die Breite der Auflauffläche bestimmt die Größe des Kontaktbereiches, welcher für einen Kontakt zwischen dem Auflaufelement des Antriebsrades und dem Führungsausleger der Basisstation zur Verfügung steht. Zudem bestimmt die Auflaufflächenbreite einen zur Herstellung eines Kontaktes maximal zulässigen Winkel zwischen dem Antriebsrad und dem Führungsausleger der Basisstation, welcher ein Maß dafür angibt, bis zu welcher Schrägstellung des Bodenbearbeitungsgerätes relativ zu einer optimalen Anfahrtsrichtung an der Basisstation die Auflauffläche des Antriebsrades noch in Kontakt mit dem Führungsausleger der Basisstation gelangen kann. Dabei gilt, dass ein frühzeitiger Kontakt zwischen der Auflauffläche und dem Führungsausleger desto eher möglich ist, je breiter die Auflauffläche ist. Allerdings hängt das Zustandekommen eines Kontaktes zwischen der Auflauffläche und dem Führungsausleger auch von anderen Parametern ab, u.a. von dem Maß der Verjüngung des freien Endbereiches des Führungsauslegers.

Das erfindungsemäße System aus der zuvor beschriebenen Basisstation und dem sich selbsttätig fortbewegenden Bodenbearbeitungsgerät beinhaltet, dass zumindest ein Antriebsrad des Bodenbearbeitungsgerätes auf einer dem anderen Antriebsrad zugewandten Radkörperstirnseite ein Auflaufelement aufweist. Besonders bevorzugt ist eine Ausführungsform, bei welcher das Bodenbearbeitungsgerät zwei gleichartig ausgestaltete Antriebsräder mit je einem Auflaufelement aufweisen. Sobald das Bodenbearbeitungsgerät mit einem Antriebsrad, nämlich dem Auflaufelement des Antriebsrades, auf den Führungsausleger gelangt, fährt das Bodenbearbeitungsgerät mit unterschiedlichen Laufflächenumfängen der beiden Antriebsräder auf dem korrespondierenden Untergrund, nämlich einerseits mit einem ersten Antriebsrad auf dem Führungsausleger, und andererseits mit einer Arbeitslauffläche eines zweiten Antriebsrades auf dem Untergrund, welcher den Führungsausleger trägt. Aufgrund der unterschiedlichen Laufflächenumfänge fährt das Bodenbearbeitungsgerät eine Kurve in Richtung desjenigen Antriebsrades, dessen Auflauffläche auf dem Führungsausleger abrollt. Eine Geradeausfahrt des Bodenbearbeitungsgerätes ergibt sich dann wieder, wenn auch das zweite Antriebsrad mit seiner Auflauffläche auf den Führungsausleger trifft. Dies kann beispielsweise zwangsläufig dadurch erreicht werden, dass der Führungsausleger, wie zuvor in Bezug auf die Basisstation beschrieben, eine sich von oben betrachtet in Richtung des Grundgehäuses der Basisstation aufweitende Breite aufweist. In Fahrtrichtung des Bodenbearbeitungsgerätes auf das Grundgehäuse der Basisstation zu weitet sich der Führungsausleger somit auf, so dass eine in Fahrtrichtung links ausgebildete Führungsauslegerkante und eine in Fahrtrichtung rechts ausgebildete Führungsauslegerkante einen sich vergrößernden Abstand zueinander aufweisen, bis ein Maximalabstand erreicht ist, der sicherstellt, dass beide Antriebsräder mit den Auflaufflächen ihrer Auflaufelemente auf dem Führungsausleger abrollen. In dieser Orientierung ist das Bodenbearbeitungsgerät dann optimal ausgerichtet, um mit der Schnittstelle der Basisstation zu koppeln. Alternativ, wenn auch nicht bevorzugt, könnte vorgesehen sein, dass das Bodenbearbeitungsgerät nur über ein erfindungsgemäß ausgebildetes Antriebsrad verfügt und eine Steuerung des Bodenbearbeitungsgerätes die weitere Ausrichtung des Bodenbearbeitungsgerätes relativ zu der Schnittstelle der Basisstation übernimmt, sobald das Bodenbearbeitungsgerät durch den Kontakt des Antriebsrades mit dem Führungsausleger wieder in die für ein Andocken an die Schnittstelle optimale Fahrtrichtung ausgelenkt wurde. Bei dieser Ausgestaltung wirken die mechanische Führung durch den Führungsausleger und die Steuereinrichtung des Bodenbearbeitungsgerätes vorteilhaft zusammen. In jedem Fall wird vorgeschlagen, dass diejenige Radkörperstirnseite des Antriebsrades, welche das Auflaufelement aufweist, nach innen weisend an dem Bodenbearbeitungsgerät angeordnet ist, d.h. so, dass die Radkörperstirnseite in Richtung des gegenüberliegenden, konzentrisch angeordneten Antriebsrades weist. Die Basisstation und das Bodenbearbeitungsgerät des Systems wirken dann so zusammen, dass das Bodenbearbeitungsgerät den Führungsausleger zwischen seinen Antriebsrädern aufnimmt und somit das auf einer Radkörperstirnseite eines Antriebsrades ausgebildete Auflaufelement in Richtung des Führungsauslegers zeigt und in Kontakt mit dem Führungsausleger gelangen kann. Über eine Abschrägung einer Randkante des Führungsauslegers kann das Auflaufelement dann auf den Führungsausleger gelangen, so dass die Auflauffläche des Auflaufelementes auf dem Führungsausleger abrollt und sich das Antriebsrad somit von einem Untergrund, auf welchem dieses zuvor abgerollt ist, abhebt.

Des Weiteren wird vorgeschlagen, dass die an die Arbeitslaufflächen angrenzenden Randbereiche der Radkörperstirnseiten zweier gegenüberliegender Antriebsräder einen axialen Abstand zueinander aufweisen, der größer ist als eine orthogonal zu der Längserstreckung orientierte maximale Außenkonturbreite der Außenkontur des Führungsauslegers, so dass der Führungsausleger zwischen den Antriebsrädern aufgenommen werden kann. Das Bodenbearbeitungsgerät und die Basisstation sind demnach korrespondierend zueinander so ausgebildet, dass der Führungsausleger genau zwischen die Antriebsräder des Bodenbearbeitungsgerätes passt, nämlich vorzugsweise so, dass die Radkörperstirnseiten mit geringstmöglichem Spiel, beispielsweise nur 1 mm, von dem Führungsausleger beabstandet sind, wenn die Auflaufflächen der Auflaufelemente beider Antriebsräder auf dem Führungsausleger der Basisstation laufen. Diese Ausgestaltung zwingt das Bodenbearbeitungsgerät in eine geradlinige Anfahrtsrichtung relativ zu dem Grundgehäuse der Basisstation. Der Führungsausleger weitet sich auf dem Weg zu dem Grundgehäuse der Basisstation bis zu der maximalen Außenkonturbreite der Außenkontur des Führungsauslegers auf, so dass sich der Führungsausleger verbreitert, bis die maximale Außenkonturbreite erreicht ist. Die maximale Außenkonturbreite betrifft vorzugsweise einen größeren Längenabschnitt der Längserstreckung des Führungsauslegers, so dass der Führungsausleger in eine Richtung zu dem Grundgehäuse der Basisstation hin, mit optimal langen parallelen Randkanten des Führungsauslegers ausgestaltet ist. Dies stellt sicher, dass die Antriebsräder des Bodenbearbeitungsgerätes dann aufgrund des Abstandes der Antriebsräder zueinander und der konstanten maximalen Außenkonturbreite des Führungsauslegers in diesem Längenabschnitt spurtreu auf dem Führungsausleger abrollen.

Des Weiteren wird vorgeschlagen, dass die Längserstreckung des Führungsauslegers mindestens so groß ist wie ein axialer Abstand zweier konzentrisch angeordneter Antriebsräder des Bodenbearbeitungsgerätes. Vorzugsweise entspricht die Länge der Führungsausleger-Längserstreckung somit mindestens dem Radabstand des Bodenbearbeitungsgerätes, um dem Bodenbearbeitungsgerät einen ausreichenden Abrollweg auf dem Führungsausleger zur Verfügung zu stellen, welcher ausreichend ist, das Bodenbearbeitungsgerät gegenüber der Basisstation auszurichten, bevor das Bodenbearbeitungsgerät die Schnittstelle des Grundgehäuses der Basisstation erreicht.

Die vertikale Höhe des Führungsauslegers ist erfindungsgemäß größer als die halbe Durchmesserdifferenz zwischen dem Auflaufflächendurchmesser und dem Arbeitslaufflächendurchmesser, so dass das Antriebsrad des Bodenbearbeitungsgerätes nicht mehr auf der Arbeitslauffläche abgestützt ist, wenn die Auflauffläche auf dem Führungsausleger abrollt. In anderen Worten ist die vertikale Höhe des Führungsauslegers bei Kontakt der Arbeitslauffläche des Arbeitsrades mit der Bodenfläche größer als ein Abstand zwischen dem in Richtung der Bodenfläche gewandten Teilbereich des Auflaufelementes und der Bodenfläche, so dass in dem Fall, dass das Antriebsrad mit einem Auflaufelement auf dem Führungsausleger abrollt, kein Kontakt mehr zwischen der Arbeitslauffläche und der Bodenfläche besteht. Um sicherzustellen, dass der Kontakt der Arbeitslauffläche mit der Bodenfläche aufgehoben wird, genügt es, dass die vertikale Höhe des Führungsauslegers um beispielsweise 0,5 mm oder mehr größer ist als die Differenz der Radien von Arbeitslauffläche und Auflauffläche.

### Kurze Beschreibung der Zeichnungen

Im Folgenden wird die Erfindung anhand von Ausführungsbeispielen näher erläutert. Es zeigen:
- Fig. 1: ein erfindungsgemäßes System aus einem Bodenbearbeitungsgerät und einer Basisstation,
- Fig. 2: eine Seitenansicht des erfindungsgemäßen Systems,
- Fig. 3: eine Draufsicht auf die Basisstation,
- Fig. 4: eine Draufsicht auf die Basisstation mit dem Bodenbearbeitungsgerät,
- Fig. 5: eine Schnittansicht durch ein Antriebsrad des Bodenbearbeitungsgerätes und einen Führungsausleger der Basisstation,
- Fig. 6: eine Schnittansicht des auf dem Führungsausleger abrollenden Antriebsrades.

### Beschreibung der Ausführungsformen

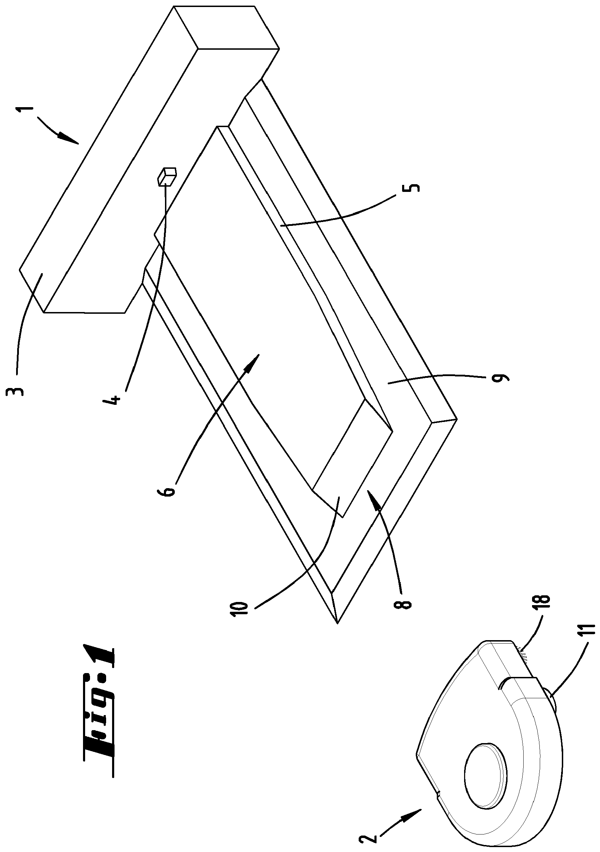

Fig. 1 zeigt eine mögliche Ausführungsform eines erfindungsgemäßen Systems aus einer Basisstation 1 und einem Bodenbearbeitungsgerät 2.

Das Bodenbearbeitungsgerät 2 ist hier beispielsweise als ein sich selbsttätig fortbewegender Reinigungsroboter, nämlich beispielsweise Saugroboter, ausgebildet. Das Bodenbearbeitungsgerät 2 weist ein Bodenbearbeitungselement 18, nämlich hier beispielsweise eine um eine horizontale Achse rotierende Reinigungswalze, sowie zwei motorisch angetriebene Antriebsräder 11 auf, die konzentrisch zueinander ausgerichtet sind. Die Antriebsräder 11 rotieren hier beispielsweise um Antriebswellen 12, über die die Antriebsräder 11 in üblicher Art und Weise jeweils über einen nicht dargestellten Elektromotor angetrieben werden. Des Weiteren verfügt das Bodenbearbeitungsgerät 2 über einen nicht dargestellten Akkumulator, der die benötigte Energie für den Antrieb sowie ggf. auch weitere elektronische und elektrische Komponenten des Bodenbearbeitungsgerätes 2 bereitstellt. Das Bodenbearbeitungsgerät 2 hat des Weiteren zur Navigation und Selbstlokalisierung innerhalb einer Umgebung eine Steuereinrichtung, die Daten einer Umgebungsdetektionseinrichtung erhält. Die Detektionseinrichtung kann beispielsweise einen Laserabstandssensor aufweisen, der Abstände zu Hindernissen in der Umgebung des Bodenbearbeitungsgerätes 2 misst. Aus den Abständen kann die Steuereinrichtung dann eine Umgebungskarte erstellen, die zur Navigation und Selbstlokalisierung des Bodenbearbeitungsgerätes 2 dient. Neben einem Abstandssensor kann das Bodenbearbeitungsgerät 2 noch weitere Sensoren aufweisen, beispielsweise einen Odometriesensor, welcher eine Fortbewegung des Bodenbearbeitungsgerätes 2 misst, Kontaktsensoren, Ultraschallsensoren oder andere.

Die Basisstation 1 weist ein Grundgehäuse 3 mit einer Schnittstelle 4 auf, an welche das Bodenbearbeitungsgerät 2 andocken kann, um beispielsweise elektrische Kontakte des Akkumulators mit elektrischen Kontakten eines Ladegerätes der Basisstation 1 zu verbinden. Des Weiteren kann die Schnittstelle 4 alternativ oder zusätzlich auch eine Strömungskanalkupplung aufweisen, die geeignet ist, einen Luftströmungsweg zwischen dem Bodenbearbeitungsgerät 2 und der Basisstation 1 herzustellen, um beispielsweise Sauggut aus einer Sauggutkammer des Bodenbearbeitungsgerätes 2 in eine Stationskammer der Basisstation 1 zu überführen. Die Basisstation 1 kann grundsätzlich eine Vielzahl unterschiedlicher Einrichtungen aufweisen, um einen Service für ein oder mehrere Bodenbearbeitungsgeräte 2 zur Verfügung zu stellen. Zu diesen Einrichtungen zählen beispielsweise ein Ladegerät für den Akkumulator des Bodenbearbeitungsgerätes 2, ein Sauggebläse, eine Sauggutkammer, eine Vorratseinrichtung für Gerätezubehör und weitere. Die Basisstation 1 weist hier des Weiteren beispielsweise eine Bodenplatte 9 auf, auf welche das Bodenbearbeitungsgerät 2 auffahren kann, um zu der Schnittstelle 4 des Grundgehäuses 3 zu gelangen. Die Bodenplatte 9 weist an ihren Randkanten vorzugsweise eine Anlaufschräge auf, um dem Bodenbearbeitungsgerät 2 das Klettern auf die Bodenplatte 9 zu erleichtern. Auf der Bodenplatte 9 befindet sich ein Führungsausleger 6, welcher eine von dem Grundgehäuse 3 wegweisende Längserstreckung 5 aufweist. Der Führungsausleger 6 weist einen freien Endbereich 8 auf, welcher vorzugsweise angeschrägt ist, um dem Bodenbearbeitungsgerät 2 ein Befahren des Führungsauslegers 6 zu vereinfachen. Obwohl dies nicht gezeigt ist, kann auch eine Randkante, die parallel zu der Längserstreckung 5 des Führungsauslegers 6 verläuft, vorzugsweise angeschrägt sein. Alternativ zu der beispielhaft gezeigten Ausbildung der Basisstation 1 mit einer Bodenplatte 9 kann der Führungsausleger 6 auch unmittelbar auf einem Untergrund stehen, so dass die Basisstation 1 unmittelbar mit dem Führungsausleger 6 auf beispielsweise einem Hartboden der Umgebung steht.

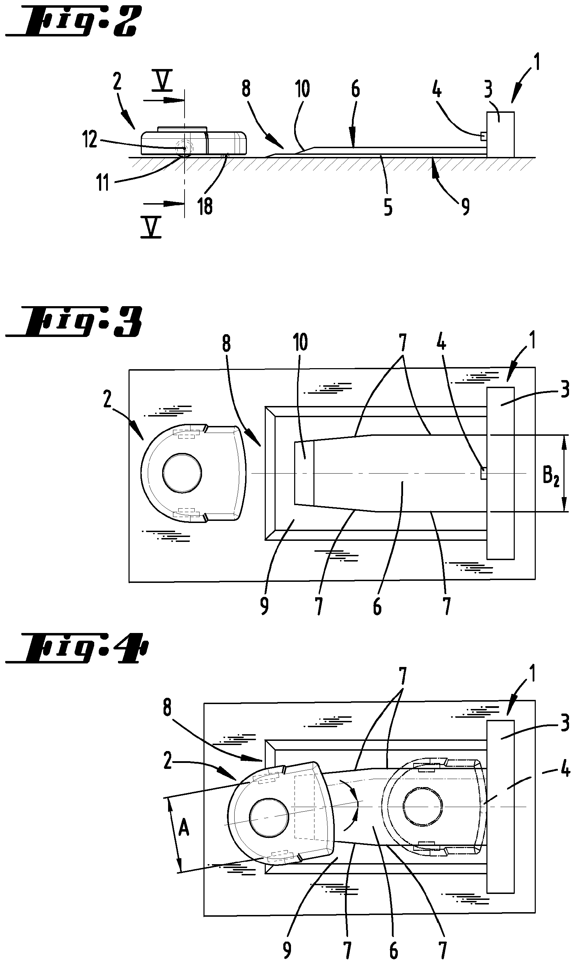

Fig. 3 zeigt im Einzelnen die Basisstation 1 mit der Bodenplatte 9 und dem Führungsausleger 6 in einer vertikalen Draufsicht. Wie zu erkennen, weist der Führungsausleger 6 eine Außenkontur 7 auf, die in Richtung des Endbereiches 8 verjüngt ausgebildet ist. Dadurch weicht die Außenkontur 7 des Führungsauslegers 6 von einer Rechteckform ab und folgt hier rein beispielhaft der Ausgestaltung eines Trapezes. Ein zu dem Grundgehäuse 3 gewandter Bereich des Führungsauslegers 6 ist hier vorzugsweise jedoch rechteckförmig ausgebildet, so dass die Randkanten in diesem Abschnitt parallel zueinander verlaufen. Angrenzend an das Grundgehäuse 3 der Basisstation 1 weist der Führungsausleger 6 dann lotrecht von oben betrachtet eine maximale Außenkonturbreite B₂ auf. Die Außenkanten der Außenkontur 7 können sich beginnend von dem freien Endbereich 8 auch anders geformt in Richtung des Grundgehäuses 3 aufweiten. Es ist nicht erforderlich, dass die Außenkontur 7 geradlinig und/oder stetig verläuft. Insbesondere kann es auch vorgesehen sein, dass der Endbereich 8 beziehungsweise ein endbereichsnaher Teil der Längserstreckung 5 des Führungsauslegers 6 gekrümmt verläuft.

Fig. 4 zeigt das Bodenbearbeitungsgerät 2 bei der Annäherung an die Schnittstelle 4 der Basisstation 1. Zur Fortbewegung des Bodenbearbeitungsgerätes 2 sind die Antriebsräder 11 angetrieben. Die Antriebsräder 11 weisen hier einen Abstand A zueinander auf, der sich von den einander zugewandten Radkörperstirnseiten 15 bemisst, nämlich derjenigen radialen Teilbereichen der Radkörperstirnseiten 15, welche an eine Arbeitslauffläche 14 der Antriebsräder 11 angrenzen. Die Figur 4 zeigt das Bodenbearbeitungsgerät 2 mit einer Fahrtrichtung/Orientierung, die nicht parallel zu dem der Außenkontur 7 des Führungsauslegers 6 ausgerichtet ist. Der Führungsausleger 6 ist so ausgebildet, dass sich das Bodenbearbeitungsgerät 2 bei einer Fortbewegung parallel zu der Längserstreckung 5 des Führungsauslegers 6 bzw. dessen Symmetrieachse optimal ausgerichtet zu der Schnittstelle 4 des Grundgehäuses 3 hinbewegt und dort, insbesondere ohne Verkanten des Gerätegehäuses, andocken kann. Wenn das Bodenbearbeitungsgerät 2 beispielsweise eine Saugaufgabe erledigt hat, bewegt es sich üblicherweise wie dargestellt auf die Basisstation 1 zu. Dabei nähert es sich in den meisten Fällen nicht parallel zu dem Führungsausleger 6 an die Basisstation 1 an und fährt unter Beibehaltung des Anfahrtswinkels auf die Bodenplatte 9 und dort auf den Führungsausleger 6 zu. Dort beginnt die Positionierfahrt, bei der das Bodenbearbeitungsgerät 2 anschließend in die definierte Andockposition an der Schnittstelle 4 manövriert wird, so dass korrespondierende Kontaktbereiche des Bodenbearbeitungsgerätes 2 und der Schnittstelle 4 miteinander verbunden werden können. Um die für ein optimales Andocken erforderlichen Manövrierbewegungen zu erreichen, trifft das Bodenbearbeitungsgerät 2 zunächst mit einem der Antriebsräder 11 schräg auf den Führungsausleger 6 der Basisstation 1.

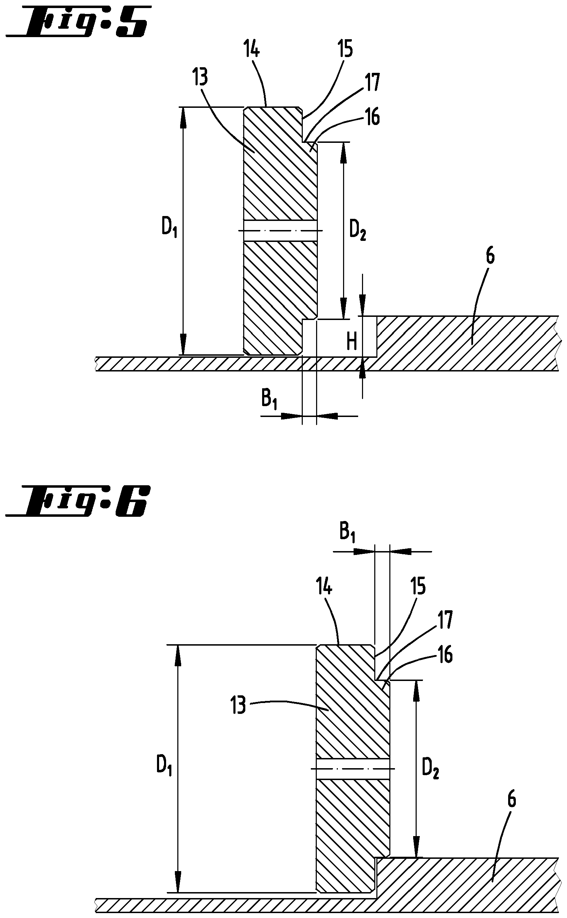

Die Figuren 5 und 6 zeigen das Zusammenwirken eines Antriebsrades 11 mit dem Führungsausleger 6 der Basisstation 1, wobei in Fig. 5 ein Zustand gezeigt ist, bei welchem das Antriebsrad 11 den Führungsausleger 6 noch nicht kontaktiert, und wobei Fig. 6 einen Zustand zeigt, bei welchem das Antriebsrad 11 auf den Führungsausleger 6 aufgefahren ist. Das Antriebsrad weist einen Radkörper 13 auf, der in üblicher Art und Weise eine Arbeitslauffläche 14 bereitstellt, mittels welcher das Antriebsrad 11 auf einer Fläche abrollt. Die Arbeitslauffläche 14 hat einen Arbeitslaufflächendurchmesser D₁. An den Radkörper 13 schließt sich, hier einteilig mit dem Radkörper 13 ausgebildet, ein Auflaufelement 16 an, welches eine Auflauffläche 17 bereitstellt. Die Auflauffläche 17 weist einen Auflaufflächendurchmesser D₂ auf. Das Auflaufelement 16 befindet sich wie in Fig. 4 dargestellt auf derjenigen Radkörperstirnseite 15 des Radkörpers 13, welche dem konzentrischen, gegenüberliegenden Antriebsrad 11 zugewandt ist. Während die Arbeitslauffläche 14 der Fortbewegung des Bodenbearbeitungsgerätes 2 während eines üblichen Arbeitsbetriebs dient, dient die Auflauffläche 17 des Auflaufelementes 16 dem Abrollen des Antriebsrades 11 auf dem Führungsausleger 6 der Basisstation 1, wodurch - wie im Folgenden dargestellt - eine Ausrichtung des Bodenbearbeitungsgerätes 2 relativ zu der Schnittstelle 4 der Basisstation 1 erreicht werden kann. Der Führungsausleger 6 weist korrespondierend zu der Auflauffläche 17 des Auflaufelementes 16 eine Höhe H auf, die etwas größer bemessen ist, als der Abstand zwischen dem Untergrund, hier der Bodenplatte 9 der Basisstation 1, und dem, dem Untergrund zugewandten Umfangsteilbereich der Auflauffläche 17. Dadurch wird erreicht, dass die Arbeitslauffläche 14 nicht mehr in Kontakt mit der Bodenplatte 9 steht, sobald sich das Antriebsrad 11 mittels des Auflaufelementes 16 auf dem Führungsausleger 6 fortbewegt. Das Auflaufelement 16 des Antriebsrades 11 weist eine Auflaufflächenbreite B₁ auf, die vorzugsweise mehrere Millimeter beträgt, um einen ausreichenden Kontakt zwischen dem Auflaufelement 16 und der Oberseite des Führungsauslegers 6 zu erreichen.
Wie in Fig. 4 dargestellt, trifft das Bodenbearbeitungsgerät 2 bei schrägem Zubewegen auf die Basisstation 1 zunächst mit nur einem Antriebsrad 11 auf den Führungsausleger 6. Dabei stößt das Auflaufelement 16 gegen eine Seitenkante der Außenkontur 7 des Führungsauslegers 6 und kann den Führungsausleger 6, insbesondere aber eine abgeschrägte Randkante der Außenkontur 7, befahren. Das Antriebsrad 11 rollt dann mittels der Auflauffläche 17 des Auflaufelementes 16 auf dem Führungsausleger 6 und hebt sich dadurch von der Bodenplatte 9 der Basisstation 1 ab, so dass die Arbeitslauffläche 14 keinen Kontakt mehr mit der Bodenplatte 9 hat. In dieser Situation steht das andere Antriebsrad 11 des Bodenbearbeitungsgerätes 2 noch mit seiner Arbeitslauffläche 14 auf der Bodenplatte 9. Dadurch, dass sich der Arbeitslaufflächendurchmesser D₁ der Arbeitslauffläche 14 des einen Antriebsrades 11 und der Auflaufflächendurchmesser D₂ des Auflaufelementes 16 des anderen Antriebsrades 11 unterscheiden, bei gleicher Winkelgeschwindigkeit der Antriebsräder 11, vollzieht das Bodenbearbeitungsgerät 2 eine Fortbewegungskurve in Richtung desjenigen Antriebsrades 11, welches auf dem Auflaufelement 16 abrollt, nämlich mit derjenigen Lauffläche, die den geringeren Laufflächendurchmesser aufweist. Eine Geradeausfahrt des Bodenbearbeitungsgerätes 2 entlang der Längserstreckung 5 des Führungsauslegers 6 ergibt sich erst dann wieder, wenn auch das zweite Antriebsrad 11 des Bodenbearbeitungsgerätes 2 mit seinem Auflaufelement 16 auf dem Führungsausleger 6 abrollt. Dies geschieht zwangsläufig durch die sich ausgehend von dem Endbereich 8 des Führungsauslegers 6 in Richtung des Grundgehäuses 3 aufweitende Außenkontur 7 des Führungsauslegers 6, wobei die maximale Außenkonturbreite B₂ der Außenkontur 7 hier ungefähr eine Gerätelange des Bodenbearbeitungsgerätes 2 vor dem Grundgehäuse 3 der Basisstation 1 erreicht ist, so dass die Außenkonturbreite B₂ des Führungsauslegers 6 in diesem Bereich im Wesentlichen dem axialen Abstand Ader Antriebsräder 11 entspricht. Der axiale Abstand A ist dabei von den Teilbereichen der Radkörperstirnseiten 15 aus bemessen, die neben dem Auflaufelement 16 liegen. "Im Wesentlichen" bedeutet hier, dass die Antriebsräder 11 so nah wie möglich an dem Führungsausleger 6 anliegen, jedoch ein geringes Bewegungsspiel vorhanden ist, um ein Widerstand verursachendes Schleifen der Antriebsräder 11 an dem Führungsausleger 6 zu vermeiden. Durch die maximale Außenkonturbreite B₂ des Führungsauslegers 6 wird schließlich erreicht, dass beide Antriebsräder 11 mit den Auflaufflächen 17 der Auflaufelemente 16 auf dem Führungsausleger 6 abrollen und relativ zu der Schnittstelle 4 der Basisstation 1 optimal ausgerichtet sind, um korrespondierende Schnittstellenelemente der Basisstation 1 und des Bodenbearbeitungsgerätes 2 miteinander zu verbinden.

## Patentansprüche

1. System aus einer Basisstation (1) zum Ausführen einer Servicehandlung an einem Bodenbearbeitungsgerät (2) und einem sich selbsttätig fortbewegenden Bodenbearbeitungsgerät (2) mit zumindest zwei Antriebsrädern (11), , wobei die Basisstation (1) ein Grundgehäuse (3) mit einer Schnittstelle (4) zum Andocken des Bodenbearbeitungsgerätes (2) und einen der Schnittstelle (4) zugeordneten, von dem Grundgehäuse (3) mit einer überwiegenden Längserstreckung (5) wegweisenden Führungsausleger (6) zum ausschließlich mechanischen Führen einer Andockbewegung des Bodenbearbeitungsgerätes (2) zu der Schnittstelle (4) aufweist, wobei eine in einer vertikalen Draufsicht betrachtete Außenkontur (7) des Führungsauslegers (6) ausgehend von dem Grundgehäuse (3) bis zu einem von dem Grundgehäuse (3) abgewandten freien Endbereich (8) des Führungsauslegers (6) verjüngt ist, **dadurch gekennzeichnet, dass** zumindest ein Antriebsrad (11) des Bodenbearbeitungsgerätes (2) einen eine Antriebswelle (12) aufnehmenden Radkörper (13) und eine in Umfangsrichtung an dem Radkörper (13) ausgebildete Arbeitslauffläche (14) aufweist, wobei der Radkörper (13) ein konzentrisch an einer Radkörperstirnseite (15) hervorstehendes zylindrisches Auflaufelement (16) mit einer in Umfangsrichtung an dem Auflaufelement (16) ausgebildeten Auflauffläche (17) aufweist, wobei ein Auflaufflächendurchmesser (D₂) der Auflauffläche (17) geringer ist als ein Arbeitslaufflächendurchmesser (D₁) der Arbeitslauffläche (14) und wobei das Auflaufelement (16) auf einer dem anderen Antriebsrad (11) zugewandten Radkörperstirnseite (15) angeordnet ist, wobei eine vertikale Höhe (H) des Führungsauslegers (6) der Basisstation (1) größer ist als die halbe Durchmesserdifferenz zwischen dem Auflaufflächendurchmesser (D₂) und dem Arbeitslauflächendurchmesser (D₁) des Antriebsrades (11), so dass das Antriebsrad (11) des Bodenbearbeitungsgerätes (2) nicht mehr auf der Arbeitslauffläche (14) abgestützt ist, wenn die Auflauffläche (17) auf dem Führungsausleger (6) abrollt.

2. System nach Anspruch 1, **gekennzeichnet durch** eine durch das Bodenbearbeitungsgerät (2) befahrbare Bodenplatte (9), auf welcher der Führungsausleger (6) ausgebildet oder angeordnet ist.

3. System nach Anspruch 1 oder 2, **dadurch gekennzeichnet, dass** der Endbereich (8) des Führungsauslegers (6) bezogen auf eine horizontale Ansicht eine nach außen weisende Anlaufschräge (10) aufweist.

4. System nach einem der vorhergehenden Ansprüche, **dadurch gekennzeichnet, dass** der Auflaufflächendurchmesser (D₂) ungefähr 70% bis 90%, insbesondere ungefähr 80%, des Arbeitslaufflächendurchmessers (D₁) beträgt.

5. System nach einem der vorhergehenden Ansprüche, **dadurch gekennzeichnet, dass** die Auflauffläche (17) des Auflaufelementes (16) in axialer Richtung eine Auflaufflächenbreite (B₁) von 2 mm bis 10 mm aufweist.

6. System nach einem der vorhergehenden Ansprüche, **dadurch gekennzeichnet, dass** die an die Arbeitslaufflächen (14) angrenzenden Randbereiche der Radkörperstirnseiten (15) zweier gegenüberliegender Antriebsräder (11) einen axialen Abstand (A) zueinander aufweisen, der größer ist als eine orthogonal zu der Längserstreckung (5) orientierte maximale Außenkonturbreite (B₂) der Außenkontur (7) des Führungsauslegers (6), so dass der Führungsausleger (6) zwischen den Antriebsrädern (11) aufgenommen werden kann.

7. System nach einem der vorhergehenden Ansprüche, **dadurch gekennzeichnet, dass** die Längserstreckung (5) des Führungsauslegers (6) mindestens so groß ist wie ein axialer Abstand (A) zweier konzentrisch angeordneter Antriebsräder (11) des Bodenbearbeitungsgerätes (2).

## Claims

1. A system comprised of a base station (1) for performing a service treatment on a floor processing device (2) and an automatically moving floor processing device (2) with at least two drive wheels (11), wherein the base station (1) has a basic housing (3) with an interface (4) for docking the floor processing device (2) and a guide extension arm (6) allocated to the interface (4) and facing away from the basic housing (3) with a predominant longitudinal extension (5) for exclusively mechanically guiding a docking movement of the floor processing device (2) to the interface (4), wherein an outer contour (7) of the guide extension arm (6) as observed in a vertical top view tapers proceeding from the basic housing (3) up to a free end area (8) of the guide extension arm (6) facing away from the basic housing (3), **characterized in that** at least one drive wheel (11) of the floor processing device (2) comprises a wheel body (13) having a drive shaft (12), and a working tread (14) formed on the wheel body (13) in the circumferential direction, wherein the wheel body (13) has a cylindrical run-on element (16) concentrically protruding on a wheel body end face (15), with a run-on tread (17) formed on the run-on element (16) in the circumferential direction, wherein a run-on tread diameter (D₂) of the run-on tread (17) is less than a working tread diameter (D₂) of the working tread (14), and wherein the run-on element (16) is arranged on a wheel body end face (15) that faces the other drive wheel (11), wherein a vertical height (H) of the guide extension arm (6) is larger than half the difference in diameter between the run-on tread diameter (D₂) and the working tread diameter (D₁), so that the drive wheel (11) of the floor processing device (2) is no longer supported on the working tread (14) when the run-on tread (17) rolls onto the guide extension arm (6).

2. The system according to claim 1, **characterized by** a floor plate (9) that can be traversed by the floor processing device (2), on which the guide extension arm (6) is formed or arranged.

3. The system according to claim 1 or 2, **characterized in that** the end area (8) of the guide extension arm (6) has an outwardly facing run-on bevel (10) relative to a horizontal view.

4. The system according to one of the preceding claims, **characterized in that** the run-on tread diameter (D₂) measures roughly 70% to 90%, in particular roughly 80% of the working tread diameter (D₁).

5. The system according to one of the preceding claims, **characterized in that** the run-on tread (17) of the run-on element (16) has a run-on tread width (B₁) of 2 mm to 10 mm in the axial direction.

6. The system according to one of the preceding claims, **characterized in that** the edge areas of the wheel body end faces (15) of two opposing drive wheels (11) bordering the working treads (14) have an axial distance (A) to each other that is greater than a maximum outer contour width (B₂) of the outer contour (7) of the guide extension arm (6) oriented orthogonal to the longitudinal extension (5), so that the guide extension arm (6) can be received between the drive wheels (11).

7. The system according to one of the preceding claims, **characterized in that** the longitudinal extension (5) of the guide extension arm (6) is at least as large as an axial distance (A) between two concentrically arranged drive wheels (11) of the floor processing device (2).

## Revendications

1. Système composé d'une station de base (1) pour effectuer une action de service sur un appareil de travail du sol (2) et d'un appareil de travail du sol (2) se déplaçant automatiquement avec au moins deux roues d'entraînement (11), la station de base (1) comprenant un boîtier de base (3) avec une interface (4) pour l'accostage de l'appareil de travail du sol (2) et un dispositif de guidage associé à l'interface (4), un dispositif de guidage (6) s'écartant du boîtier de base (3) avec une extension longitudinale prédominante (5) pour guider exclusivement mécaniquement un mouvement d'accostage de l'appareil de travail du sol (2) vers l'interface (4), un contour extérieur (7) de la dispositif de guidage (6), observé dans une vue de dessus verticale, se rétrécissant à partir du boîtier de base (3) jusqu'à une zone d'extrémité libre (8) de la dispositif de guidage (6), opposée au boîtier de base (3), **caractérisé en ce qu'**au moins une roue d'entraînement (11) de l'appareil de travail du sol (2) présente un corps de roue (13) recevant un arbre d'entraînement (12) et une surface de roulement (14) formée sur le corps de roue (13) dans la direction circonférentielle, le corps de roue (13) présente un élément de roulement cylindrique (16) faisant saillie de manière concentrique sur une face frontale (15) du corps de roue, avec une surface de roulement (17) formée sur l'élément de roulement (16) dans la direction circonférentielle, un diamètre de surface de roulement (D₂) de la surface de roulement (17) étant inférieur à un diamètre de surface de contact de travail (D₁) de la surface de roulement (14), et l'élément de roulement (16) étant disposé sur une face frontale (15) du corps de roue tournée vers l'autre roue d'entraînement (11) une hauteur verticale (H) du dispositif de guidage (6) de la station de base (1) étant supérieure à la moitié de la différence de diamètre entre le diamètre de la surface de roulement (D₂) et le diamètre de la surface de roulement (D₁) de la roue d'entraînement (11), de sorte que la roue d'entraînement (11) de l'appareil de travail du sol (2) ne s'appuie plus sur la surface de roulement (14) lorsque la surface de roulement (17) roule sur le dispositif de guidage (6).

2. Système selon la revendication 1, **caractérisé par** une plaque de fond (9) sur laquelle l'appareil de travail du sol (2) peut circuler et sur laquelle le dispositif de guidage (6) est formé ou disposé.

3. Système selon la revendication 1 ou 2, **caractérisé en ce que** la zone d'extrémité (8) du dispositif de guidage (6) présente, par rapport à une vue horizontale, un chanfrein d'attaque (10) orienté vers l'extérieur.

4. Système selon l'une quelconque des revendications précédentes, **caractérisé en ce que** le diamètre de la surface de roulement (D₂) représente environ 70% à 90%, en particulier environ 80%, du diamètre de la surface de roulement (D₂).

5. Système selon l'une des revendications précédentes, **caractérisé en ce que** la surface de roulement (17) de l'élément de roulement (16) présente, dans la direction axiale, une largeur de surface de roulement (B₁) comprise entre 2 mm et 10 mm.

6. Système selon l'une des revendications précédentes, **caractérisé en ce que** les surfaces marginales des faces frontales (15) des corps de roue de deux roues d'entraînement (11)) opposées, adjacentes aux surfaces de roulement (14), présentent entre elles une distance axiale (A), qui est supérieure à une largeur maximale de contour extérieur (B₂), orientée orthogonalement à l'extension longitudinale (5), du contour extérieur (7) de la dispositif de guidage (6), de sorte que la dispositif de guidage (6) peut être reçue entre les roues d'entraînement (11)

7. Système selon l'une des revendications précédentes, **caractérisé en ce que** l'extension longitudinale (5) du dispositif de guidage (6) est au moins aussi grande qu'une distance axiale (A) entre deux roues d'entraînement (11) de l'appareil de travail du sol (2) disposées de manière concentrique.
